# EUROPEAN PATENT SPECIFICATION

(11) **EP 2 025 580 B1**
(45) Date of publication and mention of the grant of the patent: **08.01.2014**
(21) Application number: 08162111.2
(22) Date of filing: 08.08.2008
(51) Int. Cl.: B62D 7/15, B62D 9/00, B62D 7/09

(54) **Steering group of the wheels of an axle of a vehicle**
Lenkgruppe der Räder einer Achse eines Fahrzeugs
Groupe de direction des roues d'un axe de véhicule

(30) Priority: 14.08.2007 IT MI20071678
(43) Date of publication of application: 18.02.2009
(73) Proprietor: DANA ITALIA S.p.A, 38062 Arco (Trento) (IT)
(72) Inventor: Panizzolo, Fabrizio, 35100, Padova (IT)
(74) Representative: Cosenza, Simona

(56) References cited:
- EP-A2- 1 108 569
- US-A- 3 315 759
- US-A- 5 447 321

## Description

The present invention relates to a steering group of the wheels of a vehicle.

The term "vehicle" refers to common automobiles but also elevator trucks, earth-moving vehicles, telescopic trucks, military vehicles, i.e. all vehicles which, during their normal use, effect maneuvers in which the relative wheels have a curving configuration with respect to a straight advance configuration.

The steering groups for currently known vehicles, which are generally driven mechanically by a rack coupling activated by the movement of the steering wheel or hydraulically by means of a hydraulic auxiliary system controlled by the rotation of the steering wheel, are generally extremely widespread and have the function of imposing a desired steering on the wheel(s) to which they are connected.

In particular, these known steering groups act on a wheel(s) which is(are) constrained to the vehicle by means of structural extensions.

In order to turn the wheel, when desired, the presence is currently envisaged of a rigid rod element connected at one end to a steering stem by means of a spherical coupling and at the other end to the wheel-holder group by means of a pin.

In these known groups, in order to effect a steering, a user exerts a translatory movement, generally, as already mentioned, by means of the steering wheel, to the above stem of the main cylinder which in turn entrains the other rigid rod element situated in series with the previous stem, into movement.

As this rigid rod element, however, is integrally hinged to the wheel-holder support, the latter is consequently put into movement and, in particular, in rotation around the pin through which it is rotatingly connected to the structural extensions.
EP1108569, in the name of the Applicant, discloses a known steering group.
US3315759 and US5447321 disclose steering groups according to the preamble of claim 1.

The only steering therefore allowed by the coupling described above falls within the typologies contemplated by the "Ackermann"-type geometry in which the wheels of a common axle can be oriented towards the same side and corresponds to the steerings normally effected in common bend maneuvers.

Unfortunately, however, these known groups have various drawbacks which are associated with the kinematics relating to the steering described above.

In particular they relate to the limited angular excursion granted to the wheel-holder support which is constrained and exclusively limited to the translatory movement of the above stem of the main cylinder.

In other words, unfortunately, the angular excursion of the wheel-holder group around the connection pin with the structural extensions is limited to a narrow angular range which cannot be increased beyond what is allowed and produced by the translatory movement of the stem controlled by the steering wheel.

Unfortunately the steering mechanism currently used does not allow the limits of the turning radius imposed by the Ackermann steering geometry which prevents the rotation of the whole vehicle with respect to the centre of the rigid front axle, and also with respect to the centre of the vehicle in the case of four-wheel drive vehicles, to be exceeded.

An objective of the present invention is to provide a device capable of solving the above drawbacks of the known art in an extremely simple, economical and particularly functional manner.

A further objective is to provide a steering group of the wheels of the axle of a vehicle which allows greater steering angles to be obtained with respect to those which can be reached with the known steering groups.

Another objective is to provide a steering group of the wheels of the axle of a vehicle which enables wide steering angles to be obtained without requiring effort on the part of the user acting on the steering wheel.

Yet another objective is to provide a steering group of the wheels of the axle of a vehicle which allows the vehicle to also be steered in rotation conditions around a point inside the vehicle itself such as, for example, the centre of the rigid front axle or with respect to the centre of the vehicle in the case of four-wheel-drive vehicles.

These objectives according to the present invention are achieved by providing a steering group of the wheels of a vehicle as specified in claim 1.

Further characteristics of the invention are indicated in the subsequent claims.

The characteristics and advantages of a steering group of the wheels of a vehicle according to the present invention will appear more evident from the following illustrative and non-limiting description, referring to the enclosed schematic drawings, in which:
figure 1 is a view from above of a steering group of the wheels of the axle of a vehicle according to the present invention in a possible straight advance configuration of the vehicle;
figure 2 is a view from above of the steering group of figure 1 in another possible configuration of use according to a classical steering in accordance with the Ackermann steering geometry;
figure 3 is a view from above of the steering group of figure 1 in another possible configuration of use according to a steering in which the rotation of the vehicle is effected around the centre of the rigid front axle of the vehicle;
figure 4 is a schematic view from above of a vehicle equipped with a steering group of the wheels of the axle according to the present invention in which said steering group is in the configuration of figure 2;
figure 5 is a schematic view from above of a vehicle equipped with a steering group of the wheels of the axle according to the present invention in which said steering group is in the configuration of figure 3; and
figure 6 is a schematic view from above of a vehicle equipped with two steering groups of the wheels of the two axles according to the present invention in which both steering groups are in the configuration of figure 3.

With reference to the figures, these show, with 10, a steering group of the wheels of an axle of a vehicle 30 according to the present invention.

Said steering group 10 of the wheels of the axle of a vehicle 30 comprises two structural extensions 11, 11' which are respectively connected at one end to a relative wheel-holder group 13, 13' and at another end to a central portion 12 of the axle integral with or oscillating with respect to the vehicle 30.

To allow the steering of the vehicle 30, each wheel-holder group 13, 13' is rotatingly connected to the relative structural extension 11, 11' by means of a relative substantially vertical first pin 14, 14'.

In particular, according to the invention, the steering group 10 comprises independent steering means 100, 100' of each wheel-holder group 13, 13', which are equipped, for each wheel-holder group 13, 13', with a telescopic unit 15, 17, 15', 17' having a varying length which acts on the wheel-holder group 13, 13' itself modifying its orientation with respect to the relative structural extension 11, 11'.

According to a preferred embodiment each of the two telescopic units 15, 17, 15', 17' comprises a first sleeve element 15, 15' and a first rod element 17, 17' which slides inside the previous first sleeve element 15, 15'.

In particular, this coupling forms a stem (first rod element 17, 17')- cylinder (first sleeve element 15, 15') coupling in which the movement of the first rod element 17, 17' can be hydraulically driven, for example by means of pressurized oil previously introduced into the first sleeve elements 15, 15'.

According to the invention each telescopic unit 15, 17, 15', 17' is interposed between the relative wheel-holder group 13, 13' and the central portion 12 of the axle and is suitable for imposing, through the sliding of the first rod element 17, 17' with respect to the first sleeve element 15, 15', a desired angular position on the relative wheel-holder group 13, 13' with respect to the structural extension 11, 11' to which it is connected.

According to the embodiment shown in the figures, the steering means 100, 100' for each wheel-holder group 13, 13' comprise, in addition to the above first rod elements 17, 17' and the first sleeve elements 15, 15', a main steering stem 20 which moves in a main steering sleeve 21 and two articulated elements 18, 18' situated at the ends of the main steering stem 20.

In particular, the main steering sleeve 21 envisages two ends symmetrically positioned laterally with respect to the central portion 12 from which the main steering stem 20 at least partially protrudes, free to translate with respect to this.

According to the invention, the movement of the main steering stem 20 and of the first rod elements 17, 17' with respect to the first sleeve elements 15, 15' are independent and differently controllable. For example, the movement of the main steering stem 20 can be controlled, as is known, by the steering wheel, whereas the movement of the first rod elements 17, 17' with respect to the first sleeve elements 15, 15' can be hydraulically activated by specific commands not necessarily directly connected to the rotation of the steering wheel.

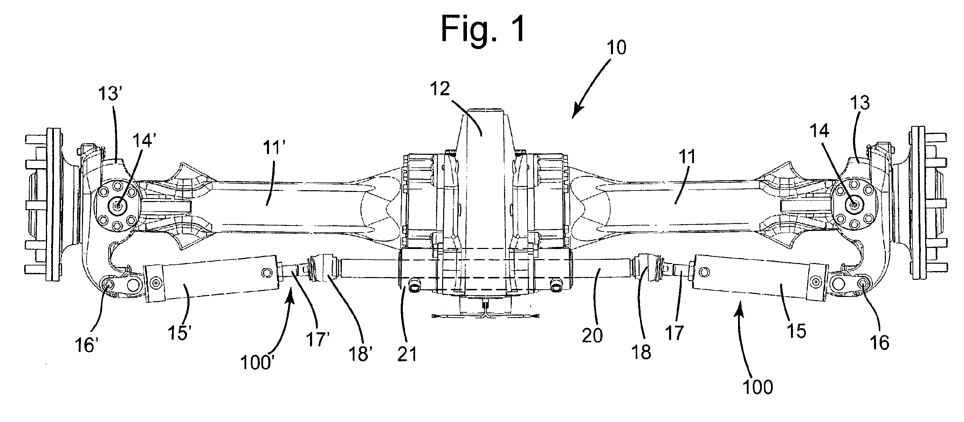

As can be seen in the examples shown in figures 1-3, the first sleeve elements 15, 15' are respectively rotatingly connected at one end to the relative wheel-holder group 13, 13', by means of a second pin 16, 16' parallel to the first pin 14, 14', whereas the relative first rod elements 17, 17' are respectively equipped with an end which slides inside the above first sleeve elements 15, 15' and another end spherically connected to relative articulated elements 18, 18'.

In particular said articulated elements 18, 18' are assembled at the opposite ends of the main steering stem 20 and form the axial translation limit of the same with respect to the main steering sleeve 21 connected to the central portion 12 of the axle.

According to a preferred embodiment, the central portion 12 of the axle is integral with the vehicle 30 substantially along the longitudinal centre of the vehicle 30 and the structural extensions 11, 11' substantially develop from said central portion 12 of the axle orthogonally to the vehicle 30 towards the two ends with respect to which the wheel-holder groups 13, 13' rotate.

The main steering stem 20 is moveable with respect to the relative main steering cylinder 21, generally rigidly constrained to the central portion 12 of the axle, substantially parallel to the structural extensions of the axle 11, 11' and, in a known way, this movement is, as already mentioned, activated according to known mechanisms such as a rack mechanism or by hydraulic activation.

If there is no relative movement between the first rod elements 17, 17' and the respective first sleeves 15, 15', the movement of the main steering stem 20 allows the wheel-holder group 13, 13' to be steered according to requirements, respecting the geometrical constraints imposed on the mechanism by the Ackermann geometry.

In particular, consequently, common curving maneuvers are allowed, with the object of the present invention, which can be effected with currently known steering devices.

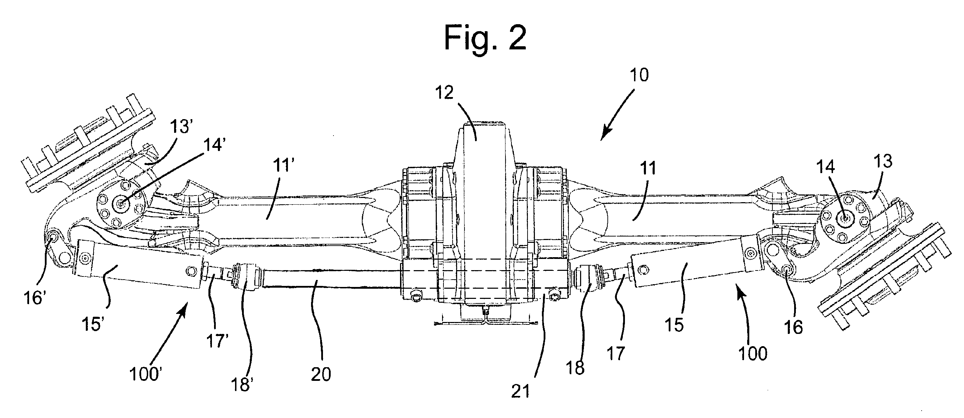

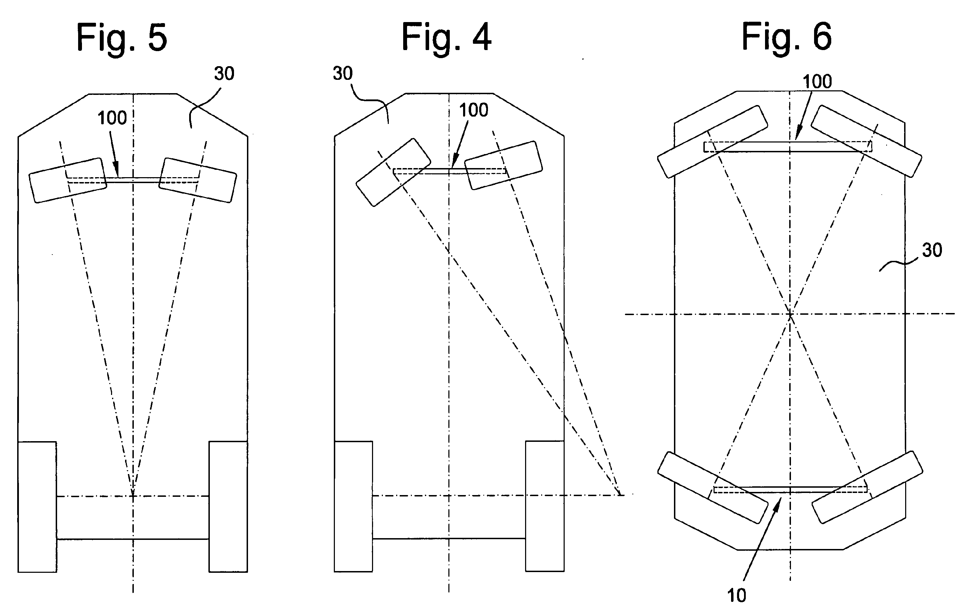

An example of this steering is represented in figures 2 and 4 in which, for geometrical reasons, the instantaneous rotation centre of the vehicle 30 is outside the vehicle 30 itself.

If, on the other hand, the main steering stem 20 is kept in a blocked position and centered with respect to the centre of the vehicle 30 and there is a telescopic movement of the two first rod elements 17, 17' with respect to the relative sleeves 15, 15' on both the right and left side of the axle, new angular positions of the wheel-holder groups 13, 13' are reached, which are suitable for obtaining geometrical constraints that are such as to impose on the vehicle 30 a rotation around a point corresponding to the centre of the rigid front axle of the vehicle 30 itself.

In particular, the instantaneous rotation centre is preferably situated in the centre of the other axle with respect to that which adopts the object of the present invention, generally the rigid front axle, or, should the vehicle 30 comprise two steering axles equipped with two steering groups 10, the vehicle 30 can effect rotations around its own centre.

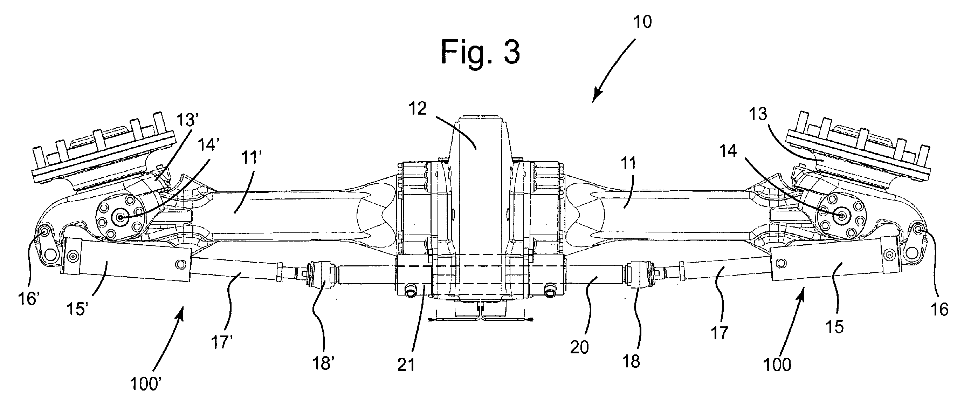

These angular positions of the wheel-holder groups 13, 13' reached, thanks to the movement of the two first rod elements 17, 17' with respect to the relative sleeves 15, 15' are represented in figure 3, whereas figures 5 and 6 show two vehicles 30 respectively in rotation around the centre of the other axle, and around its own centre depending on whether they are equipped with one or two steering groups 10.

Upon analyzing the figures, these in fact respectively show three possible different steering configurations of the wheel-holder groups 13, 13' with respect to the relative, independent, positions of the first rod elements 17, 17' and main steering stem 20.

Figure 1 shows a steering group 10 of the wheels of a vehicle 30, object of the present invention, with a zero steering angle in which the stem 20 protrudes symmetrically from the main steering cylinder 21 and the first rod elements 17, 17' are in such a position, substantially entirely limited, with respect to the relative first sleeves 15, 15' as to impose a zero steering angle on the two wheel-holder groups 13, 13'.

Figure 2 shows a steering group 10 of the wheels of a vehicle 30, object of the present invention, in which the main steering stem 20 has undergone a total axial translation towards the left side of the centre of the vehicle 30 whereas the two couplings of first rod elements 17, 17' - first sleeves 15, 15' are in an unaltered position with respect to the previous figure.

In particular, therefore, this configuration shown in figure 2 can be obtained starting from that illustrated in figure 1 exclusively thanks to the translation of the main steering stem 20 and effects a steering of the Ackermann type shown in figure 4.

Figure 3 shows a steering group 10 of a wheel of a vehicle 30 object of the present invention in which the stem 20 is kept in a blocked and centered position with respect to the centre of the vehicle 30, the same position as figure 1, whereas the first rod elements 17, 17' are brought, for example at run-end, into excursion with respect to the relative first sleeve 15, 15'.

Consequently, in particular, this configuration shown in figure 3, can be obtained starting from that shown in figure 1 exclusively thanks to the movement of the first rod elements 17, 17' with respect to the relative first sleeve elements 15, 15' and allows the vehicle 30 to effect a rotation around the centre of the other axle as shown in figure 5, or to effect a rotation around the centre of the vehicle 30 if the vehicle 30 envisages both of the two steering axles equipped with the steering group 10, object of the present invention.

This latter possibility is schematically shown in figure 6.

As can be seen in figure 3, the movements of the first rod elements 17, 17' with respect to the relative first sleeve 15, 15', preferably selectively driven hydraulically, allow an extra angular excursion of the wheel-holder groups to be obtained, also with the stem 20 in a blocked and centered position.

Thanks to the steering group 100 of the wheels of a vehicle 30 according to the present invention, it is advantageously possible to confer this angular position with a maximum almost transversal opening visible in figures 5, 6 and 3 to the wheel-holder groups 13, 13' with respect to the relative structural extensions 11, 11'.

This aspect is also advantageous because, as this excursion is independent of the movement of the main steering stem 20 and therefore independent of the rotation of the steering wheel on which the user acts, it allows these extra-excursion configurations to be obtained hydraulically without requiring excessive effort on the part of the user and without endangering the use of the main steering cylinder 21.

The functioning of the device, object of the invention, can be easily understood.

The steering group 10 of the wheels of an axle of a vehicle 30 according to the present invention is equipped with steering means 100, 100' which comprise for each wheel-holder group 13, 13', a telescopic unit 15, 17, 15', 17' each equipped with a first rod element 17, 17' which slides inside a relative first sleeve element 15, 15'.

In particular, said at least one telescopic unit 15, 17, 15', 17' is interposed between the relative wheel-holder group 13, 13' and a central portion 12 of the axle integral or oscillating with respect to the vehicle 30, in series with a main steering stem 20 driven by the user by means of the steering wheel or hydraulically.

Thanks to the present invention, the steering of the wheel-holder groups 13, 13' is also possible independently of the excursion of the main steering stem 20 in effecting steering geometries which allow the vehicle 30 to rotate around the centre of the other axle or around the centre of the vehicle 30 itself.

It can thus be seen that the steering group of the wheels of a vehicle according to the present invention achieves the objectives previously indicated.

The steering group of the wheels of a vehicle of the present invention thus conceived can undergo numerous modifications and variants, all included in the same inventive concept; furthermore all the details can be substituted by technically equivalent elements. In practice, the materials used, as also the dimensions, can vary according to technical requirements.

## Claims

1. A steering group (10) of the wheels of an axle of a vehicle (30) comprising two structural extensions (11, 11') respectively connected at one end to a wheel-holder group (13, 13') and at another end to a central portion (12) of the axle connected to said vehicle (30), said wheel-holder groups (13, 13') being respectively rotatingly connected to said two structural extensions (11, 11') around a respective first pin (14, 14') and said steering group (10) also comprising steering means (100, 100') of said wheel-holder groups (13, 13'), said steering means (100, 100') comprise two telescopic units (15, 17, 15', 17') each equipped with a first sleeve element (15, 15') and a first rod element (17, 17') which slides inside said first sleeve element (15, 15'), said telescopic units (15, 17, 15', 17') being interposed between said wheel-holder groups (13, 13') and said central portion (12) of the axle and being suitable for independently modifying the angular position of said wheel-holder groups (13, 13') with respect to said two structural extensions (11, 11'), **characterized in that** said steering means (100, 100') also comprise a main moveable steering stem (20) in a main steering sleeve (21), said main steering sleeve (21) being rigidly constrained to the central portion (12) of the axle, said first sleeve elements (15, 15') being respectively rotatingly connected to said wheel-holder groups (13, 13') by means of a second pin (16, 16'), said first rod elements (17, 17') being respectively equipped with an end which slides inside said first sleeve elements (15, 15') and another end spherically connected to an articulated element (18, 18'), said main steering stem (20) being provided with two ends which extend from opposite sides of said central portion (12) partially outside from said main steering sleeve (21) connected to said articulated elements (18, 18') connected to said first rod elements (17, 17').

2. The steering group (10) according to claim 1, **characterized in that** said central portion (12) of the axle is integral with said vehicle (30) substantially along the longitudinal centre of said vehicle (30).

3. The steering group (10) according to claim 1, **characterized in that** said two structural extensions (11, 11') develop substantially orthogonally to the axis of said vehicle (30) from said central portion (12) of the axle towards the outside of said vehicle (30).

4. The steering group (10) according to claim 1, **characterized in that** said main steering stem (20) can be moved substantially parellelly to said structural extensions (11, 11').

5. The steering group (10) according to claim 1, **characterized in that** said second pins (16, 16') are parallel to said first pins (14, 14').

6. The steering group (10) according to claim 1, **characterized in that** the movement of said main steering stem (20) is rack- or hydraulically controlled and the movement of said first rod elements (17, 17') with respect to said first sleeve elements (15, 15') is hydraulically driven.

7. The steering group (10) according to claim 6, **characterized in that** the movement of said main steering stem (20) and the movement of said first rod elements (17, 17') with respect to said first sleeve elements (15, 15') are independent of each other.

## Patentansprüche

1. Lenkgruppe (10) der Räder einer Achse eines Fahrzeugs (30) mit zwei baulichen Verlängerungen (11, 11'), die jeweils an einem Ende mit einer Radhaltergruppe (13, 13') und an einem anderen Ende mit einem Zentralabschnitt (12) der mit dem Fahrzeug (30) verbundenen Achse verbunden sind, wobei die Radhaltergruppen (13, 13') jeweils rotierend mit den beiden baulichen Verlängerungen (11, 11') um einen jeweiligen ersten Stift (14, 14') verbunden sind und die Lenkgruppe (10) auch ein Lenkmittel (100, 100') der Radhaltergruppen (13, 13') umfasst, wobei das Lenkmittel (100, 100') zwei Teleskopeinheiten (15, 17, 15', 17') umfasst, die jeweils mit einem ersten Buchsenelement (15, 15') und einem ersten Stangenelement (17, 17') ausgestattet sind, das in dem ersten Buchsenelement (15, 15') gleitet, wobei die Teleskopeinheiten (15, 17, 15', 17') zwischen den Radhaltergruppen (13, 13') und dem Zentralabschnitt (12) der Achse angeordnet und zum unabhängigen Modifizieren der Winkelposition der Radhaltergruppen (13, 13') in Bezug auf die beiden baulichen Verlängerungen (11, 11') geeignet sind,
**dadurch gekennzeichnet, dass**
das Lenkmittel (100, 100') auch einen bewegbaren Hauptlenkschaft (20) in einer Hauptlenkbuchse (21) umfasst, wobei die Hauptlenkbuchse (21) starr auf den Zentralabschnitt (12) der Achse eingeschränkt ist, wobei die ersten Buchsenelemente (15, 15') jeweils rotierend mit den Radhaltergruppen (13, 13') mittels eines zweiten Stifts (16, 16') verbunden sind, wobei die ersten Stangenelemente (17, 17') jeweils mit einem Ende, das in den ersten Buchsenelementen (15, 15') gleitet, und mit einem anderen Ende ausgestattet sind, das kugelförmig mit einem Gelenkelement (18, 18') verbunden ist, wobei der Hauptlenkschaft (20) mit zwei Enden versehen ist, die sich von gegenüberliegenden Seiten des Zentralabschnitts (12) teilweise außerhalb von der Hauptlenkbuchse (21) erstrecken, die mit den Gelenkelementen (18, 18') verbunden sind, die mit den ersten Stangenelementen (17, 17') verbunden sind.

2. Lenkgruppe (10) nach Anspruch 1,
**dadurch gekennzeichnet, dass**
der Zentralabschnitt (12) der Achse einteilig mit dem Fahrzeug (30) im Wesentlichen entlang des Längszentrums des Fahrzeugs (30) ist.

3. Lenkgruppe (10) nach Anspruch 1,
**dadurch gekennzeichnet, dass**
die beiden baulichen Verlängerungen (11, 11') sich im Wesentlichen orthogonal zu der Achse des Fahrzeugs (30) von dem Zentralabschnitt (12) der Achse zu der Außenseite des Fahrzeugs (30) entwickeln.

4. Lenkgruppe (10) nach Anspruch 1,
**dadurch gekennzeichnet, dass**
der Hauptlenkschaft (20) im Wesentlichen parallel zu den baulichen Verlängerungen (11, 11') bewegt werden kann.

5. Lenkgruppe (10) nach Anspruch 1,
**dadurch gekennzeichnet, dass**
die zweiten Stifte (16, 16') parallel zu den ersten Stiften (14, 14') sind.

6. Lenkgruppe (10) nach Anspruch 1,
**dadurch gekennzeichnet, dass**
die Bewegung des Hauptlenkschaftes (20) über Gestänge oder hydraulisch gesteuert ist und die Bewegung der ersten Stangenelemente (17, 17') in Bezug auf die ersten Buchsenelemente (15, 15') hydraulisch angetrieben ist.

7. Lenkgruppe (10) nach Anspruch 6,
**dadurch gekennzeichnet, dass**
die Bewegung des Hauptlenkschaftes (20) und die Bewegung der ersten Stangenelemente (17, 17') in Bezug auf die ersten Buchsenelemente (15, 15') unabhängig voneinander sind.

## Revendications

1. Groupe de direction (10) des roues d'un essieu d'un véhicule (30) comprenant deux extensions structurelles (11, 11') respectivement raccordées, au niveau d'une extrémité, à un groupe porte-roue (13, 13') et au niveau d'une autre extrémité, à une partie centrale (12) de l'essieu raccordée audit véhicule (30), lesdits groupes porte-roue (13, 13') étant respectivement raccordés en rotation auxdites deux extensions structurelles (11, 11') autour d'une première broche (14, 14') respective et ledit groupe de direction (10) comprenant également des moyens de direction (100, 100') desdits groupes porte-roue (13, 13'), lesdits moyens de direction (100, 100') comprennent deux unités télescopiques (15, 17, 15', 17') chacune équipée avec un premier élément de manchon (15, 15') et un premier élément de tige (17, 17') qui coulisse dans ledit premier élément de manchon (15, 15'), lesdites unités télescopiques (15, 17, 15', 17') étant intercalées entre lesdits groupes porte-roue (13, 13') et ladite partie centrale (12) de l'essieu et étant appropriées pour modifier indépendamment la position angulaire desdits groupes porte-roue (13, 13') par rapport auxdites deux extensions structurelles (11, 11'), **caractérisé en ce que** lesdits moyens de direction (100, 100') comprennent également une tige mobile de direction principale (20) dans un manchon de direction principal (21), ledit manchon de direction principal (21) étant contraint rigidement sur la partie centrale (12) de l'essieu, lesdits premiers éléments de manchon (15, 15') étant respectivement raccordés en rotation auxdits groupes porte-roue (13, 13') au moyen d'une seconde broche (16, 16'), lesdits premiers éléments de tige (17, 17') étant respectivement équipés avec une extrémité qui coulisse à l'intérieur desdits premiers éléments de manchon (15, 15') et une autre extrémité raccordée de manière sphérique à un élément articulé (18, 18'), ladite tige de direction principale (20) étant prévue avec deux extrémités qui s'étendent à partir des côtés opposés de ladite partie centrale (12) partiellement à l'extérieur dudit manchon de direction principal (21) raccordé auxdits éléments articulés (18, 18') raccordés auxdits premiers éléments de tige (17, 17').

2. Groupe de direction (10) selon la revendication 1, **caractérisé en ce que** ladite partie centrale (12) de l'essieu est solidaire avec ledit véhicule (30) sensiblement le long du centre longitudinal dudit véhicule (30).

3. Groupe de direction (10) selon la revendication 1, **caractérisé en ce que** lesdites deux extensions structurelles (11, 11') se développent de manière sensiblement orthogonale par rapport à l'axe dudit véhicule (30) à partir de ladite partie centrale (12) de l'essieu vers l'extérieur dudit véhicule (30).

4. Groupe de direction (10) selon la revendication 1, **caractérisé en ce que** ladite tige de direction principale (20) peut être déplacée de manière sensiblement parallèle vers lesdites extensions structurelles (11, 11').

5. Groupe de direction (10) selon la revendication 1, **caractérisé en ce que** lesdites secondes broches (16, 16') sont parallèles auxdites premières broches (14, 14').

6. Groupe de direction (10) selon la revendication 1, **caractérisé en ce que** le mouvement de ladite tige de direction principale (20) est commandé par crémaillère ou hydrauliquement et le mouvement desdits premiers éléments de tige (17, 17') par rapport auxdits premiers éléments de manchon (15, 15') est entraîné de manière hydraulique.

7. Groupe de direction (10) selon la revendication 6, **caractérisé en ce que** le mouvement de ladite tige de direction principale (20) et le mouvement desdits premiers éléments de tige (17, 17') par rapport auxdits premiers éléments de manchon (15, 15') sont indépendants l'un de l'autre.
